# EUROPÄISCHE PATENTSCHRIFT

(11) **EP 2 513 525 B1**
(45) Veröffentlichungstag und Bekanntmachung des Hinweises auf die Patenterteilung: **30.10.2013**
(21) Anmeldenummer: 10778951.3
(22) Anmeldetag: 03.11.2010
(51) Int. Cl.: F16H 63/42, G05G 5/03, G05G 1/30, B60K 26/02

(54) **VORRICHTUNG ZUR ERZEUGUNG EINER ZUSÄTZLICHEN RÜCKSTELLKRAFT AM GASPEDAL UND VERFAHREN ZU DEREN BETRIEB**
DEVICE FOR GENERATING AN ADDITIONAL RESET FORCE ON A GAS PEDAL AND METHOD FOR THE OPERATION THEREOF
DISPOSITIF POUR GENERER UNE FORCE DE RAPPEL SUPPLEMENTAIRE SUR LA PEDALE D'ACCELERATEUR ET PROCEDE POUR SON FONCTIONNEMENT

(30) Priorität: 15.12.2009 DE 102009054650
(43) Veröffentlichungstag der Anmeldung: 24.10.2012
(73) Patentinhaber: Conti Temic Microelectronic GmbH, 90411 Nürnberg (DE); Continental Engineering Services GmbH, 60489 Frankfurt (DE)
(72) Erfinder: SCHMITT, Georg, 93047 Regensburg (DE); DREWS, Frank, 90552 Röthenbach (DE); ZELL, Andreas, 90411 Nürnberg (DE); GERBIG, Thorsten, 90571 Behringersdorf (DE)
(74) Vertreter: Beck, Jörg
(86) Internationale Anmeldenummer: PCT/EP2010/066687
(87) Internationale Veröffentlichungsnummer: WO 2011/072943

(56) Entgegenhaltungen:
- EP-A2- 2 056 073
- WO-A1-2007/073828
- DE-A1- 3 232 160
- DE-A1- 10 122 162
- DE-A1- 10 250 456
- DE-A1-102004 002 114
- DE-A1-102004 024 763
- DE-A1-102004 026 407
- DE-A1-102007 008 275
- US-A1- 2009 030 582

## Beschreibung

Die vorliegende Erfindung betrifft eine Vorrichtung zur Erzeugung einer zusätzlichen Rückstellkraft am Gaspedal für Kraftfahrzeuge, wobei eine durch eine entsprechende Betätigungskraft herbeigeführte Lageänderung des Gaspedals gegenüber seiner Ausgangslage entgegen einer Rückstellkraft zu einer Erhöhung der Antriebskraft des Motors führt und bei nachlassender Betätigungskraft eine Rückstellkraft das Gaspedal in Richtung seiner Ausgangslage zurückbefördert und wobei ein Stellglied vorgesehen ist, das eine in Rückstellungsrichtung des Gaspedals wirkende zusätzliche Rückstellkraft aufbringt, und wobei das Kraftfahrzeug eine Einrichtung zur Ermittlung des Schaltzeitpunktes eines manuell geschalteten Getriebes aufweist. Außerdem betrifft die Erfindung ein Verfahren zum Betrieb der erfindungsgemäßen Vorrichtung.

Aus der WO2007/073828 A1 ist eine Schaltpunktanzeige in einem Kraftfahrzeug mit Handschaltgetriebe zum Anzeigen eines Schalthinweises bekannt. Die Anzeige des Schalthinweises erfolgt bei der vorbekannten Vorrichtung in einer Anzeigeeinheit und wird dem Fahrzeugführer visuell übermittelt. Problematisch ist bei einer derartigen visuellen Übermittlung, dass der Fahrzeugführer den Schalthinweis nur dann wahrnehmen kann, wenn er den Blick vom Verkehrsgeschehen abwendet und auf die Anzeigeeinheit schaut.

Aus der gattungsgemäßen DE 32 32 160 A1 ist daher ein Verfahren bekannt, bei dem die Rückstellkraft des Fahrpedals veränderbar ist und dem Fahrzeugführer eine haptische Rückmeldung gibt. Bei dem vorbekannten Verfahren werden dem Fahrzeugführer Informationen, beispielsweise zur Gangwahl, in Form von dem Pedalweg überlagerten Bewegungen, z.B. Vibrationen, übermittelt. Aufgrund der Vielzahl der an den Fahrzeugführer übermittelten Informationen ist es wichtig, dass dem Fahrzeugführer klare haptische Informationen übermittelt werden.

Der vorliegenden Erfindung liegt daher die Aufgabe zugrunde, eine Vorrichtung und ein Verfahren darzustellen, mit welchem dem Fahrzeugführer möglichst klare und eindeutige, haptische Informationen zur Verfügung gestellt werden.

Diese Aufgabe wird durch die Merkmale des Anspruchs 1 und 11 gelöst. Dabei wird die Rückstellkraft in Form eines rechteckförmigen Kraftimpulses aufgebracht, um dem Fahrzeugführer einen Gangwechsel des manuell geschalteten Getriebes nahe zu legen.

Vorteilhafte Weiterbildungen sind den Unteransprüchen entnehmbar.

So wird in einer bevorzugten Weiterbildung des erfindungsgemäßen Verfahrens die Rückstellkraft in Form zweier kurz aufeinander folgender rechteckförmiger Kraftimpulse realisiert. Dabei ist vorgesehen, dass ein rechteckförmiger Kraftimpuls aufgebracht wird, wenn der Fahrzeugführer einen Gangwechsel zu einem kleineren Getriebegang vornehmen soll. Der Fahrzeugführer spürt diesen einzelnen rechteckförmigen Kraftimpuls als sogenannten Einfachtick am Gaspedal. Außerdem ist vorgesehen, dass zwei rechteckförmige Kraftimpulse aufgebracht werden, wenn der Fahrzeugführer einen Gangwechsel zu einem größeren Getriebegang vornehmen soll. Diese beiden rechteckförmigen Kraftimpulse spürt der Fahrzeugführer als sogenannten Doppeltick am Gaspedal.

Die zwei kurz aufeinander folgende rechteckförmige Kraftimpulse und die dazwischen liegende Pause weisen eine Gesamtdauer von 150 bis 200 ms, vorzugsweise 180 ms, auf. Es hat sich herausgestellt, dass diese Form eines Doppelticks einerseits besonders gut vom Fahrer wahr genommen wird und andererseits nicht störend wirkt.

Bei einer besonders vorteilhaften Weiterbildung des vorgeschlagenen Verfahrens ist vorgesehen, dass der Kraftimpuls wiederholt aufgebracht wird, wenn der Fahrzeugführer keinen Gangwechsel des manuell geschalteten Getriebes vornimmt.

Um den Fahrzeugführer auf eine ignorierte Gangwechselaufforderung zu erinnern, ist das Verhältnis zwischen Kraftimpuls und dazwischen liegender Pause und/oder die Amplitude des Kraftimpulses veränderbar. Auch der Zeitabstand der wiederholten Aufbringung zweier Kraftimpulse ist veränderbar.

Eine weitere vorteilhafte Weiterbildung des erfindungsgemäßen Verfahrens sieht vor, dass das Aufbringen einer Rückstellkraft zur Gangwechselaufforderung unterdrückt wird, wenn eine fahrdynamisch kritische Situation vorliegt oder wenn es die Verkehrssituation erfordert. Eine fahrdynamisch kritische Situation liegt dann vor, wenn das Fahrzeug einer hohen Querbeschleunigung ausgesetzt ist oder wenn eine elektronische Stabilitätskontrolle aktiv ist.

Bei einer besonders vorteilhaften Weiterbildung ist ein Nachlernalgorithmus vorgesehen, der die Reaktion des Fahrzeugführers auf das Aufbringen einer Rückstellkraft ermittelt.

Die vorliegende Aufgabe wird erfindungsgemäß auch dadurch gelöst, dass Mittel vorgesehen sind, die die Rückstellkraft in Form eines rechteckförmigen Kraftimpulses aufbringen. Dabei ist vorgesehen, dass die Mittel durch eine Profilwelle realisiert werden, deren Kontur mit einem Gegenlager zusammenwirkt, das in kraftübertragender Verbindung mit der Pedalplatte steht. Die Profilwelle ist von einem Elektromotor drehantreibbar.

Die kraftübertragende Verbindung wird mittels eines Drehhebels und eines Koppelhebels realisiert, wobei die Profilwelle durch eine Drehbewegung auf den Drehhebel über das Gegenlager einwirkt. Dabei ist vorgesehen, dass die Drehbewegung der Profilwelle einen Impuls auf den Drehhebel überträgt. Dadurch wird der Drehhebel derart betätigt, dass die zusätzliche Rückstellkraft in Form einer Kraftmodulation am Gaspedal entsteht.

Bei einer alternativen Ausführungsform ist dagegen vorgesehen, dass die Drehbewegung der Profilwelle den Drehhebel im Sinne einer Körperschallaufnahme anregt. Der Körperschall breitet sich über den Koppelhebel aus und versetzt die Pedalplatte in eine Schwingung, die der zusätzlichen Rückstellkraft in Form einer Kraftmodulation entspricht.

Eine besonders vorteilhafte Weiterbildung des Erfindungsgegenstandes sieht vor, dass die Kontur der Profilwelle wellenförmig ausgebildet ist oder Nuten aufweist. Durch diese Maßnahme ist die zusätzliche Rückstellkraft in Form eines rechteckförmigen Kraftimpulses erzeugbar.

Es ist eine Zugfeder vorgesehen, die die Profilwelle mit dem Gegenlager in Eingriff hält.

Die Erfindung wird nachfolgend anhand eines Ausführungsbeispiels im Zusammenhang mit der beiliegenden Zeichnung näher erläutert. In der Zeichnung zeigen:
- Fig. 1: eine Vorrichtung zur Erzeugung einer zusätzlichen Rückstellkraft am Gaspedal;
- Fig. 2: ein Diagramm der zusätzlichen Rückstellkraft F in Rückstellrichtung nach dem Stand der Technik;
- Fig. 3: ein Diagramm der zusätzlichen Rückstellkraft F in Rückstellrichtung zur Übermittlung einer Gangwechselaufforderung an den Fahrzeugführer nach dem erfindungsgemäßen Verfahren;
- Fig. 4a: eine weitere Vorrichtung zur Erzeugung einer zusätzlichen Rückstellkraft am Gaspedal und
- Fig. 4b: eine Schnittdarstellung einer Profilwelle, die bei der Vorrichtung nach Fig. 4a anwendbar ist.

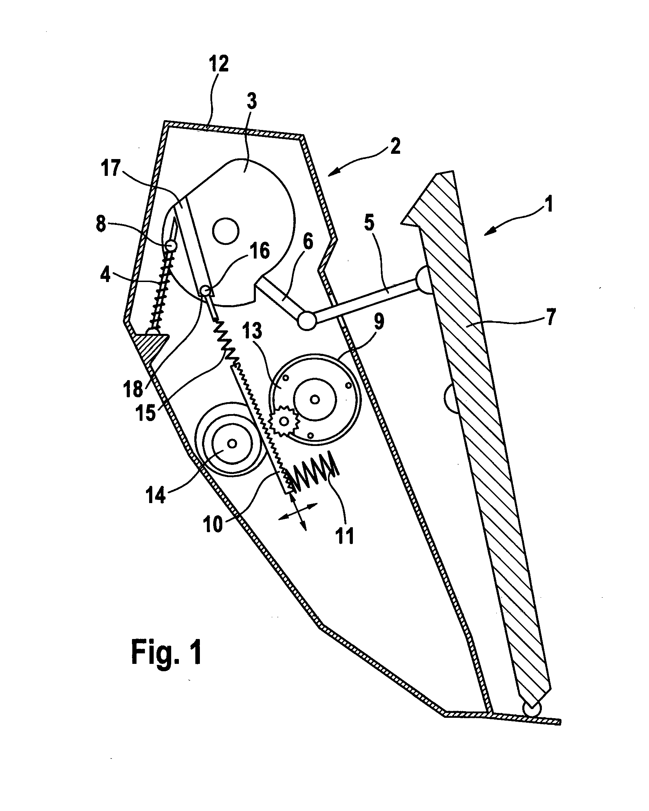

In Fig. 1 ist eine Vorrichtung zur Erzeugung einer zusätzlichen Rückstellkraft am Gaspedal 1 für Kraftfahrzeuge dargestellt. Wenn der Fahrzeugführer auf das Gaspedal 1 tritt und sich eine durch seine entsprechende Fuß-Betätigungskraft herbeigeführte Lageänderung des Gaspedals 1 gegenüber der Ausgangslage entgegen einer Rückstellkraft einstellt, so führt dies zu einer Erhöhung der Antriebskraft des Motors.

Löst der Fahrzeugführer seinen Fuß vom Gaspedal 1, so befördert eine Rückstellkraft das Gaspedal 1 in Richtung seiner Ausgangslage zurück. Wie nachfolgend noch näher erläutert wird, bringt ein Stellglied 2 eine in Rückstellungsrichtung des Gaspedals 1 wirkende zusätzliche Rückstellkraft F auf.

Wie Fig. 1 näher verdeutlicht ist an einem Gehäuse 12 eines Pedalmoduls eine Pedalplatte 7 drehbar angelenkt. In dem Gehäuse 12 ist eine Kurvenscheibe 3 drehbar angeordnet. An der Pedalplatte 7 greift ein Koppelhebel 5 an, der mit einem mit der Kurvenscheibe 3 fest verbundenen Drehhebel 6 zusammenwirkt. Man erkennt, dass bei einer Drehbewegung der Pedalplatte 7 entgegen dem Uhrzeigersinn die Kurvenscheibe 3 im Uhrzeigersinn verdreht wird. An der Kurvenscheibe 3 greift an einem Befestigungspunkt 8 eine Rückstellfeder 4 an, die eine Rückstellkraft aufbringt und auch als Rückholfeder oder Rückzugfeder bezeichnet wird. Mit Hilfe eines nicht dargestellten Sensors wird der Umfang der Drehbewegung der Kurvenscheibe 3 ermittelt, die ein Maß für den Betätigungsweg s des Gaspedals 1 ist. In Abhängigkeit des Betätigungsweges s des Gaspedals 1 wird die Antriebskraft des Motors des Kraftfahrzeugs reguliert, wobei das Verschwenken der Pedalplatte 7 entgegen dem Uhrzeigersinn zur Erhöhung der Antriebskraft des Motors führt. Wird die auf die Pedalplatte 7 ausgeübte Kraft vermindert so kann sich die Rückstellfeder 4 zusammenziehen und damit die Pedalplatte 7 zurück schieben.

Ausgehend von dieser an sich bekannten Konstruktion sorgt nun der in Fig. 1 dargestellte Aufbau dafür, dass ein Elektromotor 9 mit einem daran angeschlossenen Getriebe 13 eine Rückstellkraft auf die Pedalplatte 7 ausübt, welche der Rückstellkraft der Rückstellfeder 4 hinzugefügt wird.

Im Ausgangszustand besteht kein Kraftschluss zwischen der Motor-Getriebe-Einheit 9, 13 und einer Rückzugstange 10, welche durch eine Rückhaltefeder 11 in Fig. 1 nach links außer Eingriff zu der Motor-Getriebe-Einheit 9, 13 gedrückt wird. Wird die sogenannte Force-Feedback-Funktion zur Erzeugung der zusätzlichen Rückstellkraft F hinzugeschaltet, wird über einen nicht näher dargestellten Aktuator mit dem angeschlossenen Exzenter 14 die Rückzugstange 10 in Richtung der Motor-Getriebe-Einheit 9, 13 gedrückt und es erfolgt ein Kraftschluss zwischen der Rückzugstange 10 und Motor-Getriebe-Einheit 9, 13. Die Kurvenscheibe 3 wird nun durch die Motor-Getriebe-Einheit 9, 13 in Fig. 1 nach unten zurückgezogen und damit eine zusätzliche Rückstellkraft F erzeugt. Um das System bei einem Ausfall der Motor-Getriebe-Einheit 9, 13 oder des Aktuators zur Betätigung des Exzenters 14 übertreten zu können, erfolgt die Verbindung zwischen der Rückzugstange 10 und der Kurvenscheibe 3 über eine Ausweichfeder 15. Dabei ist mit "übertreten" folgendes gemeint. Dem Fahrer wird die Möglichkeit gegeben entgegen der von der Rückzugstange 10 ausgeübten Kraft die Pedalplatte 7 entgegen dem Uhrzeigersinn tiefer treten zu können. Die Ausweichfeder 15 ist hierzu zwischen die Kurvenscheibe 3 und die Rückzugstange 10 geschaltet. Die Aufhängung der Rückzugstange 10 kann innerhalb der Kurvenscheibe 3 nach oben ausweichen, so dass ein plötzliches Gasgeben durch eine Fehlfunktion in der Stelleinheit 2 (beispielsweise durch verkehrte Drehrichtung des Elektromotors 9) vermieden wird. Hierzu ist die Aufhängung 16 derart in einer Nut 17 geführt, dass sie an einer Wand 18 der Nut 17 angreifen und über Zugkräfte die Kurvenscheibe 3 entgegen dem Uhrzeigersinn verdrehen kann. Druckkräfte können nicht übertragen werden, da die Aufhängung 16 innerhalb der Nut 18 nach oben ausweichen kann. Statt der dargestellten Nut kann auch die Verbindung zwischen der Kurvenscheibe 3 und der Rückzugstange 10 über ein Seil erfolgen. Es muss lediglich sichergestellt werden, dass die Kraftübertragung nur in eine Richtung erfolgen kann.

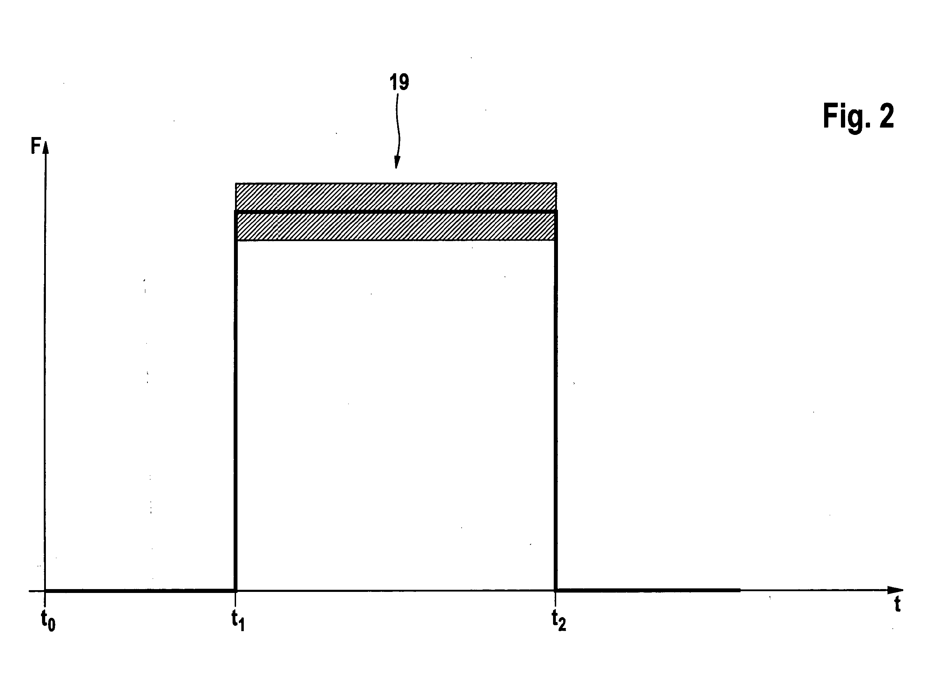

In Fig. 2 ist ein zeitlicher Verlauf der zusätzlichen Rückstellkraft F dargestellt, wie sie aus dem Stand der Technik bekannt. Wie bereits erwähnt wurde, ist es aus dem Stand der Technik bekannt, dem Fahrzeugführer Informationen zur Gangwahl, in Form von dem Pedalweg überlagerten Bewegungen, z.B. Vibrationen, zu übermitteln. Dabei ist dem Diagramm in Fig. 2 entnehmbar, dass zum Zeitpunkt t₀ keine zusätzliche Rückstellkraft F aufgebracht wird. Zum Zeitpunkt t₁ wird schlagartig eine zusätzliche Rückstellkraft F aufgebracht und derart moduliert, dass zwischen den Zeitpunkten t₁ und t₂ eine Vibration 19 entsteht, die der Fahrzeugführer an der Pedalplatte 7 spürt.

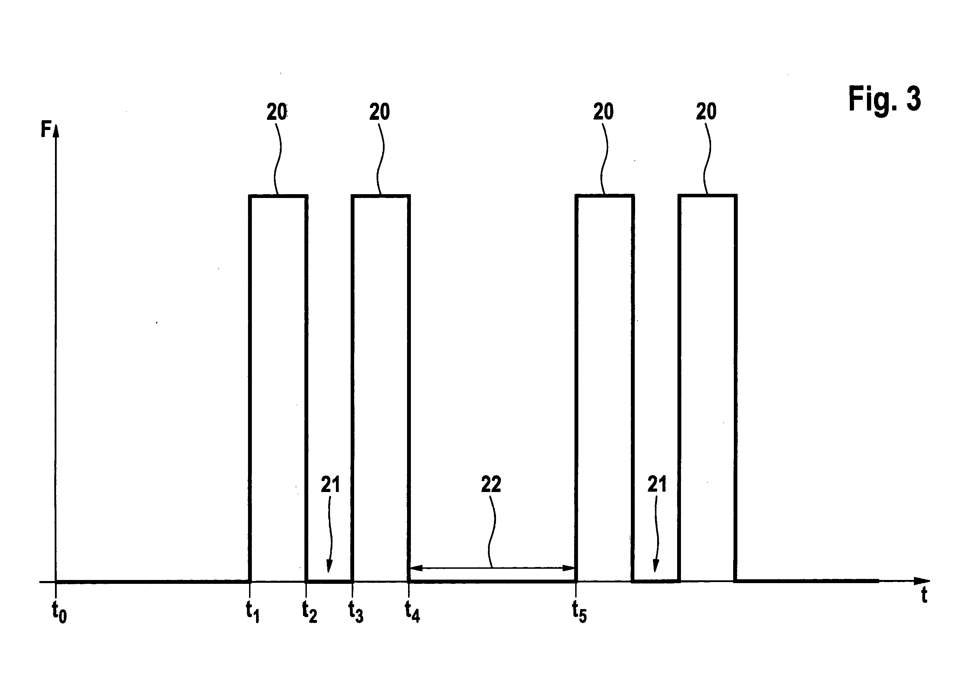

Es hat sich bei Versuchen mit Probanden herausgestellt, dass eine Rückstellkraft F in Form rechteckförmiger Kraftimpulse 20, wie sie in Fig. 3 dargestellt sind, besonders gut für den Fahrzeugführer wahrnehmbar sind. Darüber hinaus kann dem Fahrzeugführer mit Hilfe der rechteckförmigen Kraftimpulse 20 unterschiedliche Aufforderungen zur Gangwahl übermittelt werden: Es werden zwei kurz aufeinander folgende, rechteckförmige Kraftimpulse 20 aufgebracht, wenn der Fahrzeugführer einen Gangwechsel zu einem größeren Getriebegang vornehmen soll, während lediglich ein rechteckförmiger Kraftimpuls 20 aufgebracht wird, wenn der Fahrzeugführer einen Gangwechsel zu einem kleineren Getriebegang vornehmen soll. Damit wird dem Fahrzeugführer nicht nur der Hinweis zum Gangwechsel übermittelt sondern auch gleichzeitig, in welche Richtung der Gangwechsel im Sinne eines Hoch- oder Herunterschalten erfolgen soll.

In Fig. 3 ist sind jeweils zwei kurz aufeinander folgende Kraftimpulse 20 dargestellt. Der erste Kraftimpuls 20 wird zum Zeitpunkt t₁ aufgebracht und dauert an bis zum Zeitpunkt t₂. Der Betrag des Kraftimpulses 20 beträgt zwischen 5N und 30N. Die Zeitdauer eines Kraftimpulses 20 vom Zeitpunkt t₁ bis zum Zeitpunkt t₂ beträgt vorzugsweise 30ms. Bis zum Beginn des zweiten Kraftimpulses 20 zum Zeitpunkt t₃ liegt eine Pause 21. Ein so beschriebener Zyklus bestehend aus zwei Kraftimpulsen 20 und dazwischen liegender Pause 21 hat eine Gesamtdauer von 150 bis 200ms, vorzugsweise 180ms. Befolgt der Fahrzeugführer die Gangwechselempfehlung nicht, so werden ab dem Zeitpunkt t₅ erneut zwei kurz aufeinander folgende Kraftimpulse 20 aufgebracht. Bei weiterem Nichtbeachten der Aufforderung an den Fahrzeugführer zum Gangwechsel, werden erneut zwei Kraftimpulse 20 aufgebracht und gleichzeitig wird das Verhältnis zwischen den Kraftimpulsen 20 und der dazwischen liegenden Pause 21 verändert, sodass sich der subjektive Eindruck des Fahrzeugführers ändert. Ebenso ist vorgesehen, die Amplitude und damit die Stärke des Kraftimpulses 20 zu erhöhen. Auch mit dieser Maßnahme wird eine Nichtbeachtung des Fahrzeugführers wirkungsvoll durchbrochen. Eine weitere Maßnahme zur Erhöhung der Aufmerksamkeit des Fahrzeugführers ist das Verändern des Zeitabstandes 22 zwischen den Zyklen bestehend aus jeweils zwei Kraftimpulsen 20 und einer dazwischen liegenden Pause 21.

Wenn sich das Fahrzeug in einem fahrdynamisch kritischen Zustand befindet oder wenn es die Verkehrssituation oder der Fahrzeugzustand erfordert, soll der Fahrzeugführer andererseits nicht abgelenkt werden und das Aufbringen der Kraftimpulse 20 wird in einem derartigen Zustand unterdrückt. Ein fahrdynamisch kritischer Zustand liegt dann vor, wenn eine hohe Querbeschleunigung auf das Kraftfahrzeug einwirkt oder eine elektronische Stabilitätskontrolle aktiv ist. Ein Fahrzeugzustand, bei dessen Vorliegen der Fahrzeugführer nicht abgelenkt werden soll liegt vor, wenn andere, höher priorisierte Warnungen an den Fahrzeugführer übermittelt werden soll , wie beispielsweise eine Aufforderung zum Anlegen des Sicherheitsgurtes oder Warnung über ein bevorstehende Ende der Kraftstoffreserven. Eine Unterdrückung der zusätzlichen Rückstellkraft F kann auch abhängig von einer Satellitengestützten GPS-Positionsermittlung abhängig sein. Etwa beim Beschleunigen auf einer Einfädelspur einer Autobahn sollte die Aufforderung zum Hochschalten in einen höheren Gang unterbleiben.

Um den Fahrzeugführer effektiv auf einen empfohlenen Gangwechsel hinzuweisen ist es notwendig, die Reaktion des Fahrzeugführers innerhalb eines Nachlernalgorithmus zu analysieren. Der Nachlernalgorithmus ermittelt die Reaktion des Fahrzeugführers auf die aufgebrachte zusätzliche Rückstellkraft. Typische Fragestellungen sind dabei: Wie oft befolgt der Fahrzeugführer eine Gangwechselempfehlung und wie oft befolgt der Fahrzeugführer eine Gangwechselempfehlung nachdem er durch das erneute Aufbringen einer zusätzlichen Rückstellkraft erinnert wurde? Welche Reaktionszeit zwischen Gangwechselaufforderung und durchgeführtem Gangwechsel liegt vor?

Auf Grundlage des Reaktionsverhaltens des Fahrzeugführers verbessert der Nachlernalgorithmus das Aufbringen der zusätzlichen Rückstellkraft und verändert das Verhältnis von Kraftimpuls 20 zur Pause 21 oder die Zeitspanne 22 zur Wiederholung eines Kraftimpulses 20.

Durch eine verbesserte Reaktion des Fahrzeugführers auf eine Aufforderung zum Gangwechsel wird der Verbrennungsmotor des Kraftfahrzeugs stets mit einem optimalen Wirkungsgrad betrieben und der Verbrauch an Kraftstoff und damit der Ausstoß an CO₂ wird verringert.

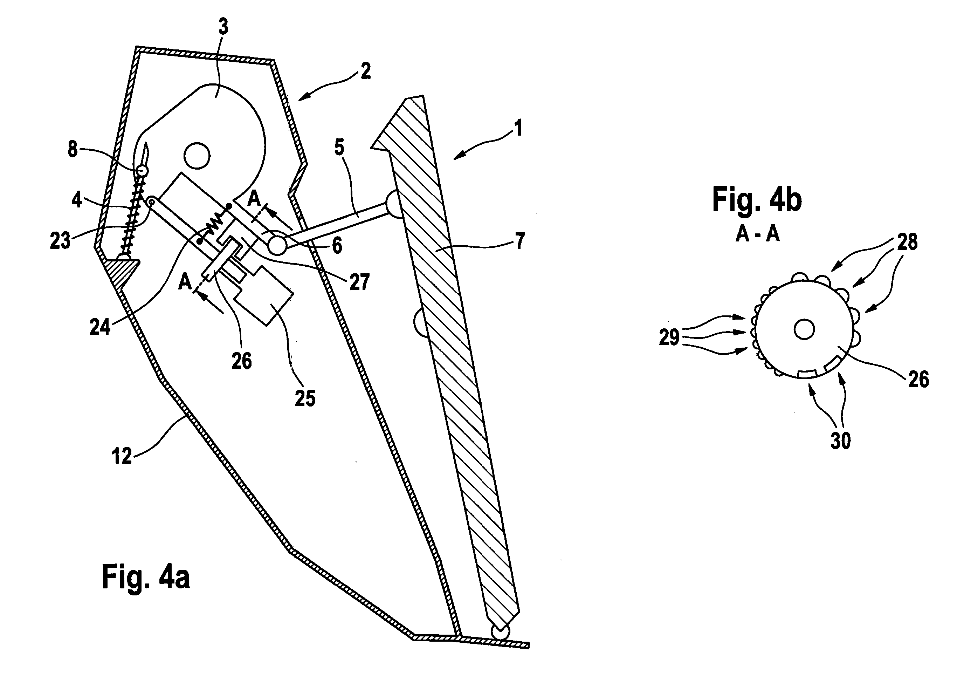

In Fig. 4a ist eine weitere Vorrichtung zur Erzeugung einer Rückstellkraft am Gaspedal dargestellt. Gleiche Bauteile in Bezug auf die in Fig. 1 dargestellte Vorrichtung tragen dieselben Bezugsziffern. In einem Gehäuse 12 ist eine Kurvenscheibe 3 drehbar angeordnet. An der Pedalplatte 7 greift ein Koppelhebel 5 an, der mit einem mit der Kurvenscheibe 3 fest verbundenen Drehhebel 6 zusammenwirkt. Bei einer Drehbewegung der Pedalplatte 7 entgegen dem Uhrzeigersinn verdreht sich die Kurvenscheibe 3 im Uhrzeigersinn. Eine Rückstellfeder 4, die eine Rückstellkraft aufbringt, ist an der Kurvenscheibe 3 an einem Befestigungspunkt 8 angebracht. Wird die auf die Pedalplatte 7 ausgeübte Kraft vermindert, so kann sich die Rückstellfeder 4 zusammenziehen und damit die Pedalplatte 7 zurück schieben.

Bei der in Fig. 4a dargestellten Ausführung ist zur Erzeugung einer Rückstellkraft eine Profilwelle 26 vorgesehen, die mit Hilfe eines Gelenks 23 an der Kurvenscheibe 3 angelenkt ist und die von einem Elektromotor 25 drehangetrieben wird. Die Kontur der Profilwelle 26 ist als Schnittdarstellung in Fig. 4b dargestellt und ist in zwei Abschnitten wellenförmig ausgebildet. Die wellenförmige Ausbildung der Kontur der Profilwelle 26 verursacht je nach Amplitude der aufgeprägten Wellenform 28, 29 ein mehr oder weniger starkes Vibrieren am Gaspedal 1. In einem weiteren Abschnitt der Profilwelle sind zwei Nuten 30 eingebracht, die einen rechteckförmigen Kraftimpuls am Gaspedal 1 bewirken, wie nachfolgend noch näher erläutert wird.

Die Profilwelle 26 bzw. deren eben beschriebene Kontur 28, 29, 30 wirkt auf ein Gegenlager 27, das mit dem Koppelhebel 6 fest verbunden ist. Die Profilwelle 26 wird mit dem Gegenlager 27 mit Hilfe einer Zugfeder 24 in Eingriff gehalten. Wird die Profilwelle 26 vom Elektromotor angetrieben, so überträgt die Kontur 28, 29, 30 der Profilwelle 26 einen Impuls an den Drehhebel 6. Dieser Impuls wirkt im Wesentlichen senkrecht auf den Drehhebel 6 ein und verursacht eine Drehung der Kurvenscheibe 3 entgegen dem Uhrzeigersinn. Dadurch wird aber der Koppelhebel 5 und damit die Pedalplatte 7 modulierend bewegt und der Fahrzeugführer spürt eine Rückstellkraft F in Form einer Kraftmodulation am Gaspedal 1. Bewegt der Elektromotor 25 beispielsweise gerade die Kontur der beiden Nuten 30 an dem Drehhebel 6 vorbei so erhält der Drehhebel 6 zwei Impulse. Zwischen diesen beiden Impulsen wird der Drehhebel 6 aufgrund der Wirkung der Zugfeder 24 wieder zurückgezogen. Das für den Fahrzeugführer am Gaspedal 1 spürbare Resultat sind zwei rechtseckförmige Kraftimpulse, wie sie anhand von Fig. 3 beschrieben wurden.

Alternativ ist vorgesehen, dass die Drehbewegung der Profilwelle den Drehhebel 6 im Sinne einer Körperschallaufnahme anregt. Unter Körperschall versteht man den Schall, der sich in einem Festkörper ausbreitet. Ein derartiger Körperschall breitet sich wellenförmig im Drehhebel 5 und im Koppelhebel 5 aus und sorgt für eine Bewegung der Pedalplatte 7 im und gegen den Uhrzeigersinn. Durch diese Bewegung spürt der Fahrzeugführer eine Rückstellkraft F in Form einer Kraftmodulation am Gaspedal 1.

Die in Fig. 4a und 4b beschriebene Ausführungsform benötigt zur Erzeugung einer zusätzlichen Rückstellkraft F wenige Bauteile und ist aufgrund der vergleichsweise einfachen Konstruktion besonders robust und gleichzeitig kostengünstig herstellbar.

## Patentansprüche

1. Verfahren zum Betrieb einer Vorrichtung zur Erzeugung einer zusätzlichen Rückstellkraft am Gaspedal für Kraftfahrzeuge, wobei eine durch eine entsprechende Betätigungskraft herbeigeführte Lageänderung des Gaspedals (1) gegenüber seiner Ausgangslage entgegen einer Rückstellkraft zu einer Erhöhung der Antriebskraft des Motors führt und bei nachlassender Betätigungskraft eine Rückstellkraft das Gaspedal (1) in Richtung seiner Ausgangslage zurückbefördert und wobei ein Stellglied (2) vorgesehen ist, das eine in Rückstellungsrichtung des Gaspedals (1) wirkende zusätzliche Rückstellkraft (F) aufbringt, und wobei das Kraftfahrzeug eine Einrichtung zur Ermittlung des Schaltzeitpunktes eines manuell geschalteten Getriebes aufweist, **dadurch gekennzeichnet, dass** die Rückstellkraft (F) in Form eines rechteckförmigen Kraftimpulses (20) aufgebracht wird, um dem Fahrzeugführer einen Gangwechsel des manuell geschalteten Getriebes nahe zu legen.

2. Verfahren nach Anspruch 1, **dadurch gekennzeichnet, dass** die Rückstellkraft (F) in Form zweier kurz aufeinander folgender rechteckförmiger Kraftimpulse (20) realisiert wird.

3. Verfahren nach Anspruch 1, **dadurch gekennzeichnet, dass** die zwei kurz aufeinander folgende rechteckförmige Kraftimpulse (20) und die dazwischen liegende Pause (21) eine Gesamtdauer von 150 bis 200 ms, vorzugsweise 180 ms, aufweisen.

4. Verfahren nach einem der Ansprüche 1 bis 4, **dadurch gekennzeichnet, dass** der Kraftimpuls (20) wiederholt aufgebracht wird, wenn der Fahrzeugführer keinen Gangwechsel des manuell geschalteten Getriebes vornimmt.

5. Verfahren nach Anspruch 5, **dadurch gekennzeichnet, dass** das Verhältnis zwischen Kraftimpuls (20) und dazwischen liegender Pause (21) und/oder dass die Amplitude des Kraftimpulses (20) veränderbar ist.

6. Verfahren nach einem der Ansprüche 5 oder 6, **dadurch gekennzeichnet, dass** er Zeitabstand (22) der wiederholten Aufbringung zweier Kraftimpulse (20) veränderbar ist.

7. Verfahren nach einem der vorhergehenden Ansprüche, **dadurch gekennzeichnet, dass** ein rechteckförmiger Kraftimpuls (20) aufgebracht wird, wenn der Fahrzeugführer einen Gangwechsel zu einem kleineren Getriebegang vornehmen soll.

8. Verfahren nach einem der vorhergehenden Ansprüche, **dadurch gekennzeichnet, dass** zwei rechteckförmige Kraftimpulse (20) aufgebracht werden, wenn der Fahrzeugführer einen Gangwechsel zu einem größeren Getriebegang vornehmen soll.

9. Verfahren nach einem der vorhergehenden Ansprüche, **dadurch gekennzeichnet, dass** das Aufbringen einer Rückstellkraft (F) zur Gangwechselaufforderung unterdrückt wird, wenn eine fahrdynamisch kritische Situation vorliegt oder es die Verkehrssituation erfordert.

10. Verfahren nach einem der vorhergehenden Ansprüche, **dadurch gekennzeichnet, dass** ein Nachlernalgorithmus vorgesehen ist, der die Reaktion des Fahrzeugführers auf das Aufbringen einer Rückstellkraft (F) ermittelt.

11. Vorrichtung zur Erzeugung einer zusätzlichen Rückstellkraft am Gaspedal für Kraftfahrzeuge, wobei eine durch eine entsprechende Betätigungskraft herbeigeführte Lageänderung des Gaspedals (1) gegenüber seiner Ausgangslage entgegen einer Rückstellkraft zu einer Erhöhung der Antriebskraft des Motors führt und bei nachlassender Betätigungskraft eine Rückstellkraft das Gaspedal (1) in Richtung seiner Ausgangslage zurückbefördert und wobei ein Stellglied (2) vorgesehen ist, das eine in Rückstellungsrichtung des Gaspedals (1) wirkende zusätzliche Rückstellkraft (F) aufbringt, **dadurch gekennZeichnet, dass** Mittel (25, 26, 27) vorgesehen sind, die die Rückstellkraft (F) in Form eines rechteckförmigen Kraftimpulses (20) aufbringen, um dem Fahrzeugführer einen Gangwechsel des manuell geschalteten Getriebes nahe zu legen.

12. Vorrichtung nach Anspruch 11, **dadurch gekennzeichnet, dass** die Mittel durch eine Profilwelle (26) realisiert werden, deren Kontur (28, 29, 30) mit einem Gegenlager (27) zusammenwirkt, das in kraftübertragender Verbindung mit der Pedalplatte (7) steht.

13. Vorrichtung nach Anspruch 12, **dadurch gekennzeichnet, dass** die kraftübertragende Verbindung mittels eines Drehhebels (6) und eines Koppelhebels (5) realisiert wird, wobei die Profilwelle (26) durch eine Drehbewegung auf den Drehhebel (6) über das Gegenlager (27) einwirkt.

14. Vorrichtung nach Anspruch 13, **dadurch gekennzeichnet, dass** die Drehbewegung der Profilwelle (26) den Drehhebel (6) derart betätigt, dass die zusätzliche Rückstellkraft (F) in Form einer Kraftmodulation entsteht.

15. Vorrichtung nach Anspruch 13, **dadurch gekennzeichnet, dass** die Drehbewegung der Profilwelle (26) den Drehhebel (6) im Sinne einer Körperschallaufnahme anregt und eine zusätzliche Rückstellkraft (F) in Form einer Kraftmodulation am Gaspedal (1) erzeugt.

16. Vorrichtung nach einem der Ansprüche 11 bis 15, **dadurch gekennzeichnet, dass** die Profilwelle (26) von einem Elektromotor (25) drehantreibbar ist.

17. Vorrichtung nach einem der Ansprüche 11 bis 16, **dadurch gekennzeichnet, dass** die Kontur (28, 29, 30) der Profilwelle (26) wellenförmig ausgebildet ist und/oder Nuten (30) aufweist.

18. Vorrichtung nach einem der Ansprüche 11 bis 17, **dadurch gekennzeichnet, dass** eine Zugfeder (24) vorgesehen ist, die die Profilwelle (26) mit dem Gegenlager (27) in Eingriff hält.

## Claims

1. Method for operating a device for generating an additional reset force on the gas pedal for motor vehicles, wherein a position change of the gas pedal (1) relative to the initial position thereof, induced by a corresponding actuating force, against a reset force leads to an increase in the motive power of the engine and, when there is a decrease in the actuating force, a reset force moves the gas pedal (1) back in the direction of the initial position thereof, and wherein an actuator (2) is provided, which applies an additional reset force (F) that acts in the reset direction of the gas pedal (1), and wherein the motor vehicle has a unit for determining the shifting point of a manually shifted transmission, **characterized in that** the reset force (F) is applied in the form of a rectangular force pulse (20) in order to suggest a gear change of the manually shifted transmission to the vehicle driver.

2. Method according to Claim 1, **characterized in that** the reset force (F) is implemented in the form of two rectangular force pulses (20) in quick succession.

3. Method according to Claim 1, **characterized in that** the two rectangular force pulses (20) in quick succession and the intervening pause (21) have a total duration of 150 to 200 ms, preferably 180 ms.

4. Method according to one of Claims 1 to 3, **characterized in that** the force pulse (20) is applied repeatedly if the vehicle driver does not perform a gear change of the manually shifted transmission.

5. Method according to Claim 4, **characterized in that** the ratio of the force pulse (20) to the intervening pause (21) and/or the amplitude of the force pulse (20) can be modified.

6. Method according to either of Claims 4 and 5, **characterized in that** the time interval (22) between the repeated application of two force pulses (20) can be modified.

7. Method according to one of the preceding claims, **characterized in that** a rectangular force pulse (20) is applied if the vehicle driver is supposed to perform a gear change to a lower gear.

8. Method according to one of the preceding claims, **characterized in that** two rectangular force pulses (20) are applied if the vehicle driver is supposed to perform a gear change to a higher gear.

9. Method according to one of the preceding claims, **characterized in that** the application of a reset force (F) to request a gear change is suppressed if there is a situation critical in terms of vehicle dynamics or the traffic situation requires it.

10. Method according to one of the preceding claims, **characterized in that** an adaptive learning algorithm is provided, which determines the response of the vehicle driver to the application of a reset force (F).

11. Device for producing an additional reset force on the gas pedal for motor vehicles, wherein a position change of the gas pedal (1) relative to the initial position thereof, induced by a corresponding actuating force, against a reset force leads to an increase in the motive power of the engine and, when there is a decrease in the actuating force, a reset force moves the gas pedal (1) back in the direction of the initial position thereof, and wherein an actuator (2) is provided, which applies an additional reset force (F) that acts in the reset direction of the gas pedal (1), **characterized in that** means (25, 26, 27) are provided which apply the reset force (F) in the form of a rectangular force pulse (20) in order to suggest a gear change of the manually shifted transmission to the vehicle driver.

12. Device according to Claim 11, **characterized in that** the means are implemented by a profiled shaft (26), the contour (28, 29, 30) of which interacts with a counterbearing (27), which is connected in a force-transmitting manner to the pedal plate (7).

13. Device according to Claim 12, **characterized in that** the force-transmitting connection is implemented by means of a turning lever (6) and of a coupler lever (5), wherein the profiled shaft (26) acts on the turning lever (6) by means of a turning movement via the counterbearing (27).

14. Device according to Claim 13, **characterized in that** the turning movement of the profiled shaft (26) actuates the turning lever (6) in such a way that the additional reset force (F) takes the form of a force modulation.

15. Device according to Claim 13, **characterized in that** the turning movement of the profiled shaft (26) excites the turning lever (6) by way of structure borne noise absorption and produces an additional reset force (F) in the form of a force modulation at the gas pedal (1).

16. Device according to one of Claims 11 to 15, **characterized in that** the profiled shaft (26) can be driven in rotation by an electric motor (25).

17. Device according to one of Claims 11 to 16, **characterized in that** the contour (28, 29, 30) of the profiled shaft (26) is of undulating design and/or has grooves (30).

18. Device according to one of Claims 11 to 17, **characterized in that** a tension spring (24) is provided, which holds the profiled shaft (26) in engagement with the counterbearing (27).

## Revendications

1. Procédé de fonctionnement d'un dispositif pour générer une force de rappel supplémentaire sur la pédale d'accélérateur pour des véhicules automobiles, une modification de la position de la pédale d'accélérateur (1) par rapport à sa position initiale, provoquée par une force d'actionnement correspondante, à l'encontre d'une force de rappel, conduisant à une augmentation de la force d'entraînement du moteur et, lorsque la force d'actionnement diminue, une force de rappel ramenant la pédale d'accélérateur (1) en direction de sa position initiale, et un actionneur (2) étant prévu, lequel applique une force de rappel supplémentaire (F) agissant dans la direction de rappel de la pédale d'accélérateur (1), et le véhicule automobile comprenant un dispositif pour déterminer le moment de changement de vitesse d'une transmission manuelle, **caractérisé en ce que** la force de rappel (F) est appliquée sous la forme d'une impulsion de force rectangulaire (20), afin d'indiquer au conducteur du véhicule un changement de rapport de la transmission manuelle.

2. Procédé selon la revendication 1, **caractérisé en ce que** la force de rappel (F) est réalisée sous la forme de deux impulsions de force rectangulaires (20) se succédant rapidement.

3. Procédé selon la revendication 1, **caractérisé en ce que** les deux impulsions de force rectangulaires (20) se succédant rapidement et les pauses (21) intercalées entre elles présentent une durée totale de 150 à 200 ms, de préférence de 180 ms.

4. Procédé selon l'une quelconque des revendications 1 à 3, **caractérisé en ce que** l'impulsion de force (20) est appliquée de manière répétée si le conducteur du véhicule n'effectue aucun changement de rapport de la transmission manuelle.

5. Procédé selon la revendication 4, **caractérisé en ce que** le rapport entre l'impulsion de force (20) et les pauses (21) intercalées peut être modifié et/ou **en ce que** l'amplitude de l'impulsion de force (20) peut être modifiée.

6. Procédé selon la revendication 4 ou 5, **caractérisé en ce que** l'intervalle de temps (22) de l'application répétée de deux impulsions de force (20) peut être modifié.

7. Procédé selon l'une quelconque des revendications précédentes, **caractérisé en ce qu'**une impulsion de force rectangulaire (20) est appliquée si le conducteur du véhicule doit effectuer un changement de rapport vers un rapport de transmission plus petit.

8. Procédé selon l'une quelconque des revendications précédentes, **caractérisé en ce que** deux impulsions de force rectangulaires (20) sont appliquées si le conducteur du véhicule doit effectuer un changement de rapport vers un rapport de transmission plus grand.

9. Procédé selon l'une quelconque des revendications précédentes, **caractérisé en ce que** l'application d'une force de rappel (F) pour la demande d'un changement de rapport est supprimée si une situation critique en termes de la dynamique de conduite est présente ou si la situation du trafic l'exige.

10. Procédé selon l'une quelconque des revendications précédentes, **caractérisé en ce qu**'un algorithme d'apprentissage adaptatif est prévu, lequel détermine la réaction du conducteur du véhicule à l'application d'une force de rappel (F).

11. Dispositif pour générer une force de rappel supplémentaire sur la pédale d'accélérateur pour des véhicules automobiles, une modification de la position de la pédale d'accélérateur (1) par rapport à sa position initiale, provoquée par une force d'actionnement correspondante, à l'encontre d'une force de rappel, conduisant à une augmentation de la force d'entraînement du moteur et, lorsque la force d'actionnement diminue, une force de rappel ramenant la pédale d'accélérateur (1) en direction de sa position initiale, et un actionneur (2) étant prévu, lequel applique une force de rappel supplémentaire (F) agissant dans la direction de rappel de la pédale d'accélérateur (1), **caractérisé en ce que** des moyens (25, 26, 27) sont prévus, lesquels appliquent la force de rappel (F) sous la forme d'une impulsion de force rectangulaire (20), afin d'indiquer au conducteur du véhicule un changement de rapport de la transmission manuelle.

12. Dispositif selon la revendication 11, **caractérisé en ce que** les moyens sont réalisés par un arbre profilé (26) dont le contour (28, 29, 30) coopère avec un contre-palier (27) qui est en liaison de transmission de force avec le patin de pédale (7).

13. Dispositif selon la revendication 12, **caractérisé en ce que** la liaison de transmission de force est réalisée au moyen d'un levier rotatif (6) et d'un levier d'accouplement (5), l'arbre profilé (26) agissant par un mouvement de rotation sur le levier rotatif (6) par l'intermédiaire du contre-palier (27).

14. Dispositif selon la revendication 13, **caractérisé en ce que** le mouvement de rotation de l'arbre profilé (26) actionne le levier rotatif (6) de telle sorte que la force de rappel supplémentaire (F) se produise sous la forme d'une modulation de force.

15. Dispositif selon la revendication 13, **caractérisé en ce que** le mouvement de rotation de l'arbre profilé (26) excite le levier rotatif (6) au sens d'une absorption de bruit solidien et génère une force de rappel supplémentaire (F) sous la forme d'une modulation de force sur la pédale d'accélérateur (1).

16. Dispositif selon l'une quelconque des revendications 11 à 15, **caractérisé en ce que** l'arbre profilé (26) peut être entraîné en rotation par un moteur électrique (25).

17. Dispositif selon l'une quelconque des revendications 11 à 16, **caractérisé en ce que** le contour (28, 29, 30) de l'arbre profilé (26) est ondulé et/ou comprend des rainures (30).

18. Dispositif selon l'une quelconque des revendications 11 à 17, **caractérisé en ce qu**'il est prévu un ressort de traction (24) qui maintient l'arbre profilé (26) en prise avec le contre-palier (27).
